# EUROPEAN PATENT APPLICATION

(11) **EP 2 614 896 A1**
(43) Date of publication of application: **17.07.2013**
(21) Application number: 13150836.8
(22) Date of filing: 10.01.2013
(51) Int. Cl.: B05D 5/10, C08F 2/48, C09J 7/02

(54) **Method for producing pressure-sensitive adhesive sheet having ultraviolet-ray curing-type acrylic pressure-sensitive adhesive layer**

(30) Priority: 12.01.2012 JP 2012004251
(71) Applicant: Nitto Denko Corporation, Ibaraki-shi, Osaka 567-8680 (JP)
(72) Inventor: Akiyama, Jun, Osaka, Ibaraki 567-8680 (JP); Fukunaga, Hajime, Osaka, Ibaraki 567-8680 (JP)
(74) Representative: Hannke, Christian

(57) **Abstract**

Provided is a method for producing an pressure-sensitive adhesive sheet having an ultraviolet-ray curing-type acrylic pressure-sensitive adhesive layer that can undergo, about one or more monomers therefor, high rate-polymerization to be excellent in productivity, and is also excellent in balance between pressure-sensitive adhesive performances. The method includes: applying, onto a substrate, an ultraviolet-ray curing-type acrylic pressure-sensitive adhesive composition including a photopolymerization initiator, and a monomer-component set that is/includes an alkyl (meth)acrylate; and radiating ultraviolet rays to the composition, thereby curing the composition to form a pressure-sensitive adhesive layer. In the method, the irradiance of the rays radiated in the pressure-sensitive adhesive layer forming step is 25 mW/cm² or more. When the radiation dose of the radiated ultraviolet rays is 600 mJ/cm² and is 2400 mJ/cm², the polymerization rate of the monomer-component set is 30% or less, and 70% or more, respectively.

## Description

### BACKGROUND OF THE INVENTION

### Field of the Invention

The present invention relates to a method for producing a pressure-sensitive adhesive sheet having an ultraviolet-ray curing-type acrylic pressure-sensitive adhesive layer.

### Description of the Related Art

Hitherto, an acrylic pressure-sensitive adhesive has been prepared by subjecting monomer components containing an alkyl acrylate as a main component to solution polymerization. A pressure-sensitive adhesive sheet having a pressure-sensitive adhesive layer has been produced by applying a solvent type pressure-sensitive adhesive onto a substrate, and then drying the resultant workpiece.

In recent years, considering air pollution and environmental problems, known has been a method of photopolymerizing the above-specified monomer components through ultraviolet rays to produce a pressure-sensitive adhesive sheet having an acrylic pressure-sensitive adhesive layer. This method is particularly advantageous from the viewpoint of safety and environment since the method makes it possible to produce the pressure-sensitive adhesive sheet without using any solvent.

As the above-mentioned photopolymerization-used method for producing a pressure-sensitive adhesive sheet or a pressure-sensitive adhesive tape (hereinafter referred to as an pressure-sensitive adhesive sheet), USP No. 4181752 discloses a method of applying, onto an appropriate substrate, a composition which contains the above-specified monomer components and a photopolymerization initiator as main components (hereinafter, any composition of the same type will be referred to as a composition, or an ultraviolet-ray curing-type acrylic pressure-sensitive adhesive composition), and then radiating, onto this workpiece, ultraviolet rays having wavelengths of 300 to 400 nm at an irradiance of 7 mW/cm² or less to yield a pressure-sensitive adhesive sheet. In this method, the radiation of the ultraviolet rays, which gives the relatively low irradiance, makes a polymer made from the monomer components into a high molecular weight, thereby increasing the cohesive strength of the pressure-sensitive adhesive layer (of the sheet). In such a way, a pressure-sensitive adhesive sheet can be obtained which is high in holding power at high temperature. Although the pressure-sensitive adhesive sheet yielded by this method has an advantage that its pressure-sensitive adhesive layer is improved in cohesive strength, the sheet has a problem of being low in adhering strength onto a rough surface because of a narrow molecular weight of molecules in the layer. Additionally, in the method, under conditions of radiating the ultraviolet rays at the low irradiance, the polymerization rate becomes small so that the method causes a problem of producing-performance. By contrast, under conditions of radiating the ultraviolet rays at a high irradiance, the polymerization rate is improved; however, radicals are rapidly consumed. As a result, a polymer made from the monomer components is lowered in molecular weight so that the pressure-sensitive adhesive sheet cannot be made high in holding power at high temperature.

Against these problems, JP-B-7-53849 and JP-A-7-331198 each disclose a method of radiating ultraviolet rays initially onto the above-specified monomer components at a low irradiance to cause at least 80% of the quantity of the monomer components, and then radiating ultraviolet rays onto the workpiece at a higher irradiance than the initial irradiance, whereby the method is improved in producing-performance while the resultant pressure-sensitive adhesive layer keeps a high cohesive strength. However, this method cannot solve the problem that this pressure-sensitive adhesive layer is low in adhering strength onto a rough surface. The method also causes the following problem: ultraviolet rays are radiated at a low irradiance until most of the polymerization reaction is finished; thus, the method requires a longer polymerization reaction period than the method of radiating ultraviolet rays at a high irradiance, so as to be poorer in producing-performance.

### PRIOR ART DOCUMENTS

### Patent Documents

Patent Document 1: USP No.4181752
Patent Document 2: JP-B-7-53849
Patent Document 3: JP-A-7-331198

### SUMMARY OF THE INVENTION

The present invention has been made to solve the problems, and an object thereof is to provide a method for producing an pressure-sensitive adhesive sheet having an ultraviolet-ray curing-type acrylic pressure-sensitive adhesive layer that can undergo, about one or more monomers therefor, high-rate-polymerization to be excellent in productivity, and is also excellent in balance between pressure-sensitive adhesive performances, such as adhering strength onto a rough surface, and holding power at high temperature.

In order to solve the problems, the inventors have made eager investigations to find out that the object can be attained by a method described below for producing a pressure-sensitive adhesive sheet having an ultraviolet-ray curing-type acrylic pressure-sensitive adhesive layer.

The present invention relates to a method for producing a pressure-sensitive adhesive sheet, comprising the step of applying, onto a substrate, an ultraviolet-ray curing-type acrylic pressure-sensitive adhesive composition comprising a photopolymerization initiator, as well as a monomer-component set that is/comprises an alkyl (meth)acrylate, and/or a partial polymer made from the monomer-component set, and
the step of radiating ultraviolet rays to the ultraviolet-ray curing-type acrylic pressure-sensitive adhesive composition, thereby curing the composition to form a pressure-sensitive adhesive layer,
wherein the irradiance of the ultraviolet rays radiated in the pressure-sensitive adhesive layer forming step is 25 mW/cm² or more; and
when the radiation dose of the radiated ultraviolet rays is 600 mJ/cm², the polymerization rate of the monomer-component set is 30% or less, and when the radiation dose of the radiated ultraviolet rays is 2400 mJ/cm², the polymerization rate of the monomer-component set is 70% or more.

The ultraviolet rays preferably have a peak wavelength in a wavelength range in which the molar extinction coefficient ε (l·mol⁻¹·cm⁻¹) of the polymerization initiator satisfies an expression of 0 < ε < 70.

The peak wavelength of the ultraviolet rays is preferably present in the range of 200 to 500 nm.

The monomer-component set preferably comprises a polyfunctional monomer.

About the ultraviolet rays radiated in the pressure-sensitive adhesive layer forming step, conditions for the radiation are preferably constant from the start of the radiation to the end of the radiation.

In the pressure-sensitive adhesive layer forming step, one or more ultraviolet lamps are preferably of a single type.

### EFFECTS OF THE INVENTION

According to the invention, ultraviolet rays are radiated to the ultraviolet-ray curing-type acrylic pressure-sensitive adhesive composition at the relatively high irradiance (25 mW/cm² or more). Nevertheless, when the radiation dose of the ultraviolet rays is 600 mJ/cm², the polymerization rate of the monomer-component set is 30% or less. This matter makes it possible to prevent a rapid consumption of radicals originating from the photopolymerization initiator at the initial stage of the photopolymerization reaction, and a decline in the molecular weight of the polymer to prevent a fall in the cohesive strength of the pressure-sensitive adhesive layer, and raise the holding power of the pressure-sensitive adhesive sheet at high temperature. According to the same matter, also at the later stage of the photopolymerization reaction, the radicals remain sufficiently so that the polymerization rate can be improved. As a result, the pressure-sensitive adhesive sheet can be prevented from being deteriorated in properties. Furthermore, when the radiation dose of the ultraviolet rays is 2400 mJ/cm², the polymerization rate of the monomer-component set in the ultraviolet-ray curing-type acrylic adhesive composition is 70% or more. This matter makes the molecular weight distribution of the molecules obtained after the polymerization broad in molecular weight to make it possible to prevent the pressure-sensitive adhesive layer from being lowered in adhering power onto a rough surface. Additionally, according to the same matter, the method makes it possible to polymerize the monomer-component set at a high rate to be excellent in producing-performance.

### DETAILED DESCRIPTION OF THE PREFERRED EMBODIMENTS

Hereinafter, a description will be made about a method according to an embodiment of the invention for producing a pressure-sensitive adhesive sheet having an ultraviolet-ray curing-type acrylic pressure-sensitive adhesive layer.

An ultraviolet-ray curing-type acrylic adhesive composition used in the present embodiment is a composition comprising a photopolymerization initiator, and a monomer-component set that is/comprises an alkyl (meth)acrylate and/or a partial polymer made from the monomer-component set. The composition is a composition which is applied onto a substrate, and then irradiated with ultraviolet rays, thereby undergoing the polymerization of the monomer-component set therein, so as to be turned to an ultraviolet-ray curing-type acrylic pressure-sensitive adhesive layer.

The alkyl (meth)acrylate used in the embodiment may be, for example, an alkyl (meth)acrylate having a linear or branched alkyl group having about 1 to 20 carbon atoms, preferably an alkyl (meth)acrylate having a linear or branched alkyl group having about 2 to 14 carbon atoms. Specific examples thereof include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. In the present specification, the wordings "(meth)acrylate" and "(meth)acrylic" mean "acrylate and/or methacrylate" and "acrylic and/or methacrylic", respectively.

The alkyl (meth)acrylate other than the above-mentioned alkyl (meth)acrylate, which has a linear or branched alkyl group, is preferably, for example, an alkyl (meth)acrylate having an alicyclic hydrocarbon group, such as cyclopentyl (meth)acrylate, a cycloalkyl (meth)acrylate or isobornyl (meth)acrylate.

The monomer-component set used in the embodiment may be made of a single alkyl (meth)acrylate, or a mixture of plural alkyl (meth)acrylates. The monomer-component set may also be a mixture of an alkyl (meth)acrylate and any other copolymerizable monomer. Further, a partial polymer made from the monomer-component set may be used in the embodiment.

In the embodiment, the alkyl (meth)acrylate(s) is/are (each) used as the whole or a main component of the monomer-component set, which is to constitute the ultraviolet-ray curing-type acrylic pressure-sensitive adhesive layer; thus, it is desired to use the ester(s) in a proportion of 60% or more by weight (preferably 80% or more by weight) of the whole of the monomer-component set, which is to constitute the pressure-sensitive adhesive layer.

In order that the ultraviolet-ray curing-type acrylic pressure-sensitive adhesive layer used in the invention can be improved in adhering strength onto an adherend, cohesive strength, heat-resistance, and other properties, this pressure-sensitive adhesive layer may contain, besides the alkyl (meth)acrylate(s), a polar-group-containing monomer copolymerizable therewith as one component of the monomer-component set, which is to constitute the pressure-sensitive adhesive layer.

Examples of the polar-group-containing monomer include carboxyl-group-containing monomers, such as (meth)acrylic acid, carboxyethyl (meth)acrylate, carboxypentyl (meth)acrylate, itaconic acid, maleic acid, fumaric acid, crotonic acid, and isocrotonic acid; acid anhydride monomers such as maleic anhydride, and itaconic anhydride; hydroxyl-group-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)methyl (meth)acrylate; sulfonate-group-containing monomers such as styrenesulfonic acid, allylsulfonic acid, 2-(meth)acrylamide-2-methylpropanesulfonic acid, (meth)acrylamidepropanesulfonic acid, sulfopropyl (meth)acrylate, and (meth)acryloyloxynaphthalenesulfonic acid; phosphate-group-containing monomers such as 2-hydroxyethylacryloyl phosphate; amide-group-containing monomers such as acrylamide, methacrylamide, N,N-dimethyl(meth)acrylamide, N-methylol(meth)acrylamide, N-methoxymethyl(meth)acrylamide, and N-butoxymethyl(meth)acrylamide; amino-group-containing monomers such as aminoethyl (meth)acrylate, dimethylaminoethyl (meth)acrylate, and t-butylaminoethyl (meth)acrylate; glycidyl-group-containing monomers such as glycidyl (meth)acrylate, and methylglycidyl (meth)acrylate; cyano-group-containing monomers such as acrylonitrile, and methacrylonitrile; and heterocyclic-ring-containing vinyl monomers such as N-vinylpyridine, N-vinylpiperidone, N-vinylpyrimidine, N-vinylpiperazine, N-vinylpyrrole, N-vinylimidazole, and N-vinyloxazole. These copolymerizable monomers may be used alone or in combination of two or more thereof.

The use amount of the polar-group-containing monomer is preferably 30% or less by weight of the whole of the monomer-component set, more preferably from 3 to 20% by weight thereof. If the use amount is more than 30% by weight, for example, the pressure-sensitive adhesive layer becomes too high in cohesive strength to be unfavorably declined in adhesive strength.

For the adjustment of the cohesive strength of the pressure-sensitive adhesive layer, the pressure-sensitive adhesive layer may contain a polyfunctional monomer which is a bifunctional or higher functional monomer, as one component of the monomer-component set, which is to constitute the ultraviolet-ray curing-type acrylic pressure-sensitive adhesive layer, besides the above-mentioned components.

Examples of the polyfunctional monomer include trimethylolpropane tri(meth)acrylate, pentaerythritol di(meth)acrylate, pentaerythritol tri(meth)acrylate, pentaerythritol tetra(meth)acrylate, dipentaerythritol hexa(meth)acrylate, 1,2-ethylene glycol di(meth)acrylate, 1,6-hexanediol (meth)acrylate, 1,12-dodecanediol di(meth)acrylate, (poly)ethylene glycol di(meth)acrylate, (poly)propylene glycol di(meth)acrylate, neopentyl glycol di(meth)acrylate, tetramethylolmethane tri(meth)acrylate, allyl (meth)acrylate, vinyl (meth)acrylate, divinylbenzene, epoxy acrylate, polyester acrylate, and urethane acrylate.

The use amount of the polyfunctional monomer is preferably 2% or less by weight of the whole of the monomer-component set, more preferably from 0.02 to 1% by weight thereof. If the use amount is more than 2% by weight, for example, the pressure-sensitive adhesive layer becomes too high in cohesive strength to be possibly declined in adhesive strength.

Examples of the copolymerizable monomer (as one component of the monomer-component set) other than the polar-group-containing monomer and the polyfunctional monomer include vinyl esters such as vinyl acetate, and vinyl propionate; aromatic vinyl compounds such as vinylbenzene, and vinyltoluene; olefins or dienes such as ethylene, butadiene, isoprene, and isobutylene; vinyl ethers such as vinyl alkyl ethers; vinyl chloride; alkoxyalkyl (meth)acrylate monomers such as methoxyethyl (meth)acrylate, and ethoxyethyl (meth)acrylate; imide-group-containing monomers such as cyclohexylmaleimide, and isopropylmaleimide; isocyanate-group-containing monomers such as 2-methacryloyloxyethylisocyanate; fluorine-atom-containing (meth)acrylates; and silicon-atom-containing (meth)acrylates. The amount of one or more used monomers, out of these copolymerizable monomers, is preferably from 0.1 to 10% by weight of the whole of the monomer-component set, more preferably from 0.5 to 5% by weight thereof. If the amount is more than 10% by weight, the pressure-sensitive adhesive layer becomes too high in cohesive strength to be possibly declined in tackiness, in particular, at normal temperature. If the amount is less than 0.1% by weight, the pressure-sensitive adhesive layer is declined in cohesive strength not to gain a high shear adhering strength.

The ultraviolet-ray curing-type acrylic adhesive composition contains a photopolymerization initiator. The photopolymerization initiator is not particularly limited as far as the initiator is a substance which can generate radicals by irradiation with ultraviolet rays to initiate photopolymerization. Any one of ordinarily used photopolymerization initiators can be preferably used, examples thereof including benzoin ether based, acetophenone based, α-ketol based, optically active oxime based, benzoin based, benzil based, benzophenone based, ketal based, and thioxanthone based photopolymerization initiators.

Specific examples of the benzoin ether based photopolymerization initiators include benzoin methyl ether, benzoin ethyl ether, benzoin propyl ether, benzoin isopropyl ether, benzoin isobutyl ether, 2,2-dimethoxy-1,2-diphenylethane-1-one, and anisole methyl ether.

Examples of the acetophenone based photopolymerization initiators include 2,2-diethoxyacetophenone, 2,2-dimethoxy-2-phenylacetophenone, 1-hydroxycyclohexyl phenyl ketone, 4-phenoxydichloroacetophenone, and 4-t-butyldichloroacetophenone.

Examples of the α-ketol based photopolymerization initiators include 2-methyl-2-hydroxypropiophenone, and 1-[4-(2-hydroxyethyl)phenyl]-2-hydroxy-2-methylpropane-1-one.

Examples of the optically active oxime based photopolymerization initiators include 1-phenyl-1,1-propanedione-2-(o-ethoxycarbonyl)-oxime.

Examples of the benzoin based photopolymerization initiators include benzoin.

Examples of the benzil based photopolymerization initiators include benzil.

Examples of the benzophenone based photopolymerization initiators include benzophenone, benzoylbenzoic acid, 3,3'-dimethyl-4-methoxybenzophenone, polyvinylbenzophenone, and α-hydroxycyclohexyl phenyl ketone.

Examples of the ketal based photopolymerization initiators include benzyl dimethyl ketal.

Examples of the thioxanthone based photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and dodecylthioxanthone.

The use amount of the photopolymerization initiator is not particularly limited. The amount is preferably from 0.01 to 5% by weight of the whole of the monomer-component set, more preferably from 0.03 to 3% by weight thereof. If the use amount of the photopolymerization initiator is less than 0.01% by weight, the photopolymerization reaction may become insufficient. If the use amount of the photopolymerization initiator is more than 5% by weight, the resultant polymer may be lowered in molecular weight so that the pressure-sensitive adhesive layer may be deteriorated in cohesive strength. About the photopolymerization initiator, a single species thereof may be used alone, or two or more species thereof may be used in combination.

In the embodiment, an appropriate additive, besides the monomer-component set and the photopolymerization initiator, may be incorporated into the ultraviolet-ray curing-type acrylic adhesive composition in accordance with the use purpose thereof. Examples of the additive include crosslinking agents (such as polyisocyanate based, silicone based, epoxy based, and alkyl-etherized melamine based crosslinking agents); tackifiers (such as rosin derivative resin, polyterpene resin, petroleum resin, oil-soluble phenolic resin, and other tackifiers in a solid, semisolid or liquid form at normal temperature); fillers such as hollow glass balloons; plasticizers; anti-aging agents; and antioxidants. A colorant, such as a pigment or dye, may be incorporated thereinto as far as the colorant does not hinder the photopolymerization.

In the embodiment, it is preferred to adjust the ultraviolet-ray curing-type acrylic pressure-sensitive adhesive composition into a viscosity appropriate for the work of applying the composition onto a substrate, or a work similar thereto. The adjustment of the viscosity of this composition is attained, for example, by adding a polymer, a polyfunctional monomer or an analogue that may be of various types, such as a polymeric thickening additive, or by subjecting the monomer-component set in the ultraviolet-ray curing-type acrylic adhesive composition to partial polymerization. The partial polymerization may be conducted before or after the addition of the polymer, the polyfunctional monomer or the analogue that may be of various types, such as a polymeric thickening additive. The viscosity of the ultraviolet-ray curing-type acrylic pressure-sensitive adhesive composition may also be varied in accordance with the amount of the additive, or other factors. When the monomer-component set in the ultraviolet-ray curing-type acrylic adhesive composition is partially polymerized, the polymerization rate to be attained cannot be decided without reservation. For reference, the polymerization rate is preferably 20% or less, more preferably 15% or less. If the rate is more than 20%, the polymer becomes too high in viscosity so that the composition is not easily applied onto a substrate.

In the embodiment, the ultraviolet-ray curing-type acrylic pressure-sensitive adhesive composition is applied onto a substrate for a pressure-sensitive adhesive sheet.

The substrate used in the embodiment, for a pressure-sensitive adhesive sheet, may be a substrate that may be of various materials, for example, a synthetic resin film such as a polyester film, or a fibrous substrate.

The method for applying the ultraviolet-ray curing-type acrylic pressure-sensitive adhesive composition onto the substrate is not particularly limited, and may be a known appropriate method such as roll coating, bar coating or die coating.

In the embodiment, the ultraviolet-ray curing-type acrylic pressure-sensitive adhesive composition is applied onto a surface or both surfaces of the substrate, and then ultraviolet rays are radiated to this ultraviolet-ray curing-type acrylic pressure-sensitive adhesive composition to photopolymerize the monomer-component set in the ultraviolet-ray curing-type acrylic pressure-sensitive adhesive composition to form an ultraviolet-ray curing-type acrylic pressure-sensitive adhesive layer. In this way, a pressure-sensitive adhesive sheet is produced.

In the embodiment, the irradiance of the ultraviolet rays radiated to the ultraviolet-ray curing-type acrylic adhesive composition is 25 mW/cm² or more, more preferably 40 mW/cm² or more. If the irradiance of the ultraviolet rays is less than 25 mW/cm², the polymerization reaction period becomes long. Thus, the method may be poor in producing-performance. The irradiance of the ultraviolet rays is preferably 200 mW/cm² or less. If the irradiance is more than 200 mW/cm², the photopolymerization initiator is rapidly consumed. Thus, the adhesive becomes low in molecular weight to be possibly declined in holding power, in particular, at high temperature.

In the embodiment, the photopolymerization reaction of the monomer-component set in the ultraviolet-ray curing-type acrylic pressure-sensitive adhesive composition is conducted in such a manner that when the radiation dose of the ultraviolet rays is 600 mJ/cm², the polymerization rate of the monomer-component set is 30% or less, more preferably 25% or less, and when the radiation dose of the ultraviolet rays is 2400 mJ/cm², the polymerization rate of the monomer-component set is 70% or more, more preferably 80% or more. Considering the producing-performance, when the radiation dose of the ultraviolet rays is 600 mJ/cm², the polymerization rate of the monomer-component set is preferably 10% or more.

In the case where the polymerization rate of the ultraviolet-ray curing-type acrylic pressure-sensitive adhesive composition is 30% or more when the radiation dose of the ultraviolet rays is 600 mJ/cm², radicals originating from the photopolymerization initiator are rapidly consumed at the initial stage of the photopolymerization reaction so that the molecular weight of the resultant polymer is lowered. Thus, the pressure-sensitive adhesive layer is declined in cohesive strength not to be possibly raised in holding power at high temperature. At the later stage of the photopolymerization reaction, the radicals originating from the photopolymerization initiator hardly remain. Thus, an unreacted fragment of the monomer-component set remains easily in the pressure-sensitive adhesive layer so that the pressure-sensitive adhesive sheet may generate an odor or may decline in properties.

In the case where the polymerization rate of the monomer-component set in the ultraviolet-ray curing-type acrylic pressure-sensitive adhesive composition is 70% or less when the radiation dose of the ultraviolet rays is 2400 mJ/cm², the pressure-sensitive adhesive layer is improved in cohesive strength while the layer may be lowered in adhering strength onto a rough surface because of a narrow molecular weight distribution of the molecules in the layer. Moreover, the polymerization rate may become small to cause a problem of the producing-performance. A final polymerization rate of the monomer-component set in the ultraviolet-ray curing-type acrylic adhesive composition is preferably 97% or more, more preferably 98% or more. When this polymerization rate is less than 97%, the pressure-sensitive adhesive sheet may be deteriorated in properties. Considering the producing-performance, the radiation dose of the ultraviolet rays necessary for adjusting the final polymerization rate of the monomer-component set in the ultraviolet-ray curing-type acrylic adhesive composition is preferably 6000 mJ/cm² or more, more preferably 8000 mJ/cm² or more.

The above-mentioned photopolymerization reaction can be attained by combining the photopolymerization initiator appropriately with an ultraviolet lamp from which the ultraviolet rays are radiated. In the embodiment, the photopolymerization reaction can be attained by combining the photopolymerization initiator with an ultraviolet lamp for radiating ultraviolet rays having a peak wavelength in a wavelength range in which the molar extinction coefficient ε (l·mol⁻¹·cm⁻¹) of the polymerization initiator satisfies an expression of 0 < ε < 70, preferably 0 < ε < 40. If the molar extinction coefficient is 70 or more, the pressure-sensitive adhesive layer tends to be remarkably poor in heat-resistant holding power.

In the embodiment, the peak wavelength of the ultraviolet rays radiated from the ultraviolet lamp ranges preferably from 200 to 500 nm, more preferably from 320 to 390 nm. If the peak wavelength of the ultraviolet rays is more than 500 nm, the photopolymerization initiator may not be decomposed so that the polymerization reaction may not be initiated. If the peak wavelength of the ultraviolet rays is less than 200 nm, chains of the polymer may be cleaved so that the pressure-sensitive adhesive layer may be deteriorated in adhesive property.

Examples of the ultraviolet lamp used in the embodiment include a low-pressure mercury lamp, a high-pressure mercury lamp, a superhigh-pressure mercury lamp, a metal halide lamp, an electrodeless lamp, an LED lamp, a xenon lamp, and a Deep UV lamp. One or more ultraviolet lamps of only one type may be used, or ultraviolet lamps of plural types may be used in combination. In the embodiment, it is preferred to use one or more only-one-type ultraviolet lamps, considering the simplicity of facilities, and the simplicity and easiness of the maintenance of the facilities.

In the embodiment, the advantageous effects of the present invention can be obtained even when conditions for the radiation, such as the wavelength of the ultraviolet rays and the irradiance thereof, are not varied (that is, conditions for the ultraviolet radiation are constant) from the start of the radiation to the end thereof. Considering the simplicity of the facilities, the simplicity and easiness of the maintenance, and those of the setting of conditions for the sheet-production, it is preferred to make the ultraviolet-radiating conditions constant from the start of the radiation to the end thereof.

The irradiance of ultraviolet rays may be measured by use of a measuring instrument (trade name: "UV Power Pack", manufactured by EIT Co., Ltd.).

The reaction is hindered by oxygen in the air. Thus, in order to block oxygen, it is preferred to form a release film or an analogue thereof onto a layer based on the application of the acrylic adhesive composition, or conduct the photopolymerization reaction in the atmosphere of nitrogen. A release treatment agent (release agent) used when a release film or an analogue thereof is formed onto a substrate on which the application-based layer is to be formed may be, for example, a silicone release agent, or a long-chain-alkyl containing release agent.

The pressure-sensitive adhesive sheet of the embodiment may be produced by using a release paper piece as the substrate, forming an ultraviolet-ray curing-type acrylic pressure-sensitive adhesive layer onto the release paper piece, and then transferring this ultraviolet-ray curing-type acrylic pressure-sensitive adhesive layer onto another substrate.

The thickness of the pressure-sensitive adhesive sheet produced by the producing method of the embodiment is not particularly limited. The thickness is preferably determined to adjust the thickness of the pressure-sensitive adhesive layer into the range of 0.01 to 10 mm, particularly, 0.02 to 5 mm. If the thickness of the pressure-sensitive adhesive layer is more than 10 mm, the layer does not easily transmit ultraviolet rays so that much time is required for polymerizing the monomer-component set. Thus, the method may be poor in producing-performance.

### Examples

Hereinafter, the invention will be described in detail by way of examples. However, the invention is never limited by the examples.

### Preparation of Acrylic Polymer Syrup 1:

Into a four-necked flask were charged 90 parts by weight of 2-ethylhexyl acrylate (2EHA), 10 parts by weight of acrylic acid, 0.05 part by weight of a photopolymerization initiator, 1-hydroxycyclohexyl phenyl ketone (trade name: IRGACURE 184, manufactured by BASF), and 0.05 part by weight of a photopolymerization initiator, 2,2-dimethoxy-1,2-diphenylethane-1-one (trade name: IRGACURE 651, manufactured by BASF). The mixture was exposed to ultraviolet rays in the atmosphere of nitrogen to photopolymerize the monomers partially. In this way, a partial polymer (acrylic polymer syrup 1) was yielded which had a polymerization rate of 7% by weight.

### Preparation of Acrylic Polymer Syrup 2:

A photopolymerization was conducted in the same way as in the preparation of the acrylic polymer syrup 1 except that the photopolymerization initiators for the acrylic polymer syrup 1 were changed to 0.1 part by weight of "IRGACURE 184". In this way, a partial polymer (acrylic polymer syrup 2) was yielded which had a polymerization rate of 8% by weight.

### Preparation of Acrylic Polymer Syrup 3:

A photopolymerization was conducted in the same way as in the preparation of the acrylic polymer syrup 1 except that the photopolymerization initiators for the acrylic polymer syrup 1 were changed to 0.1 part by weight of "IRGACURE 651 ". In this way, a partial polymer (acrylic polymer syrup 3) was yielded which had a polymerization rate of 8% by weight.

### Preparation of Acrylic Polymer Syrup 4:

A photopolymerization was conducted in the same way as in the preparation of the acrylic polymer syrup 1 except that the photopolymerization initiators for the acrylic polymer syrup 1 were changed to 0.1 part by weight of bis(2,4,6-trimethylbenzoyl)-phenylphosphine oxide ("IRGACURE 819", manufactured by BASF). In this way, a partial polymer (acrylic polymer syrup 4) was yielded which had a polymerization rate of 12% by weight.

### Example 1:

### Preparation of Ultraviolet-Ray Curing-Type Acrylic Pressure-Sensitive Adhesive Composition:

To 100 parts by weight of the acrylic polymer syrup 1 was added 0.04 part by weight of 1,6-hexanediol diacrylate, and then these components were mixed with each other into an even state to prepare an ultraviolet-ray curing-type acrylic adhesive composition.

### Production of Pressure-Sensitive Adhesive Sheet:

Prepared was a polyester film having a single surface release-treated with silicone and having a thickness of 38 µm (trade name: MRF, manufactured by Mitsubishi Polyester Film Inc.). An applicator was used to apply the above-mentioned ultraviolet-ray curing-type acrylic pressure-sensitive adhesive composition onto the release-treated surface to give a final thickness of 60 µm. In this way, an application-based layer was formed. Next, prepared was a polyester film having a single surface release-treated with silicone and having a thickness of 38 µm (trade name: MRN, manufactured by Mitsubishi Polyester Film Inc.). The front surface of the above-mentioned applied ultraviolet-ray curing-type acrylic adhesive composition was covered with this polyester film to face the release-treated surface of this polyester film to the application-based layer. In this way, the application-based layer of the ultraviolet-ray curing-type acrylic pressure-sensitive adhesive composition was blocked from oxygen. An electrodeless lamp-attached ultraviolet radiating device of a belt-conveyer type, the attached lamps being ones (trade name: V BULB manufactured by Fusion UV Systems Japan K.K.), was used to convey the pressure-sensitive adhesive sheet yielded as described above at a conveying speed of 2 m/minute, and radiate ultraviolet rays having wavelengths of 320 to 390 nm at an irradiance of 75 mW/cm² onto the pressure-sensitive adhesive sheet, which was being conveyed. In this case, the radiation dose of the ultraviolet rays was 300 mJ/cm² when the conveyance was attained one time. The conveyance was repeated ten times to adjust the radiation dose of the ultraviolet rays to 3000 mJ/cm². In this way, the monomer-component set contained in the ultraviolet-ray curing-type acrylic pressure-sensitive adhesive composition was photopolymerized to yield a pressure-sensitive adhesive sheet.

### Example 2:

A pressure-sensitive adhesive sheet was produced in the same way as in Example 1 except the following: the ultraviolet lamps were changed to LED lamps (trade name: LC-L5, manufactured by Hamamatsu Photonics K.K.); and the radiation dose of the ultraviolet rays was 600 mJ/cm² when the conveyance was attained one time, and the conveyance was repeated ten times to adjust the radiation dose of the ultraviolet rays to 6000 mJ/cm².

### Example 3:

A pressure-sensitive adhesive sheet was produced in the same way as in Example 1 except the following: the acrylic polymer syrup 1 was changed to the acrylic polymer syrup 2; the ultraviolet lamps were changed to metal halide lamps (manufactured by Harison Toshiba Lighting Corp.); and the radiation dose of the ultraviolet rays was 600 mJ/cm² when the conveyance was attained one time, and the conveyance was repeated ten times to adjust the radiation dose of the ultraviolet rays to 6000 mJ/cm².

### Example 4:

A pressure-sensitive adhesive sheet was produced in the same way as in Example 1 except the following: the acrylic polymer syrup 1 was changed to the acrylic polymer syrup 2; the ultraviolet lamps were changed to electrodeless lamps (trade name: D VALVE, manufactured by Fusion UV Systems Japan K.K.); and the radiation dose of the ultraviolet rays was 600 mJ/cm² when the conveyance was attained one time, and the conveyance was repeated ten times to adjust the radiation dose of the ultraviolet rays to 6000 mJ/cm².

### Example 5

A pressure-sensitive adhesive sheet was produced in the same way as in Example 1 except the following: the acrylic polymer syrup 1 was changed to the acrylic polymer syrup 2; the ultraviolet lamps were changed to electrodeless lamps (trade name: M VALVE, manufactured by Fusion UV Systems Japan K.K.); and the radiation dose of the ultraviolet rays was 600 mJ/cm² when the conveyance was attained one time, and the conveyance was repeated ten times to adjust the radiation dose of the ultraviolet rays to 6000 mJ/cm².

### Example 6:

A pressure-sensitive adhesive sheet was produced in the same way as in Example 1 except that the acrylic polymer syrup 1 was changed to the acrylic polymer syrup 2.

### Comparative Example 1:

A pressure-sensitive adhesive sheet was produced in the same way as in Example 1 except the following: the ultraviolet lamps were changed to metal halide lamps (manufactured by Harison Toshiba Lighting Corp.); and the radiation dose of the ultraviolet rays was 600 mJ/cm² when the conveyance was attained one time, and the conveyance was repeated ten times to adjust the radiation dose of the ultraviolet rays to 6000 mJ/cm².

### Comparative Example 2:

A pressure-sensitive adhesive sheet was produced in the same way as in Example 1 except the following: the ultraviolet lamps were changed to black lights (manufactured by Harison Toshiba Lighting Corp.); and ultraviolet rays having wavelengths of 320 to 390 nm were continuously radiated at an irradiance of 8 mW/cm² to adjust the radiation dose of the ultraviolet rays to 2400 mJ/cm².

### Comparative Example 3:

A pressure-sensitive adhesive sheet was produced in the same way as in Example 1 except the following: the acrylic polymer syrup 1 was changed to the acrylic polymer syrup 3; the ultraviolet lamps were changed to electrodeless lamps (trade name: M VALVE, manufactured by Fusion UV Systems Japan K.K.); and the radiation dose of the ultraviolet rays was 600 mJ/cm² when the conveyance was attained one time, and the conveyance was repeated ten times to adjust the totalized radiation dose of the ultraviolet rays to 6000 mJ/cm².

### Comparative Example 4:

A pressure-sensitive adhesive sheet was produced in the same way as in Example 1 except the following: the acrylic polymer syrup 1 was changed to the acrylic polymer syrup 3; the ultraviolet lamps were changed to electrodeless lamps (trade name: M VALVE, manufactured by Fusion UV Systems Japan K.K.); and the radiation dose of the ultraviolet rays was 600 mJ/cm² when the conveyance was attained one time, and the conveyance was repeated ten times to adjust the totalized radiation dose of the ultraviolet rays to 6000 mJ/cm².

### Comparative Example 5:

A pressure-sensitive adhesive sheet was produced in the same way as in Example 1 except the following: the acrylic polymer syrup 1 was changed to the acrylic polymer syrup 4; the ultraviolet lamps were changed to metal halide lamps (manufactured by Harison Toshiba Lighting Corp.); and the radiation dose of the ultraviolet rays was 600 mJ/cm² when the conveyance was attained one time, and the conveyance was repeated ten times to adjust the totalized radiation dose of the ultraviolet rays to 6000 mJ/cm².

### Comparative Example 6:

A pressure-sensitive adhesive sheet was produced in the same way as in Example 1 except that the acrylic polymer syrup 1 was changed to the acrylic polymer syrup 4.

In Table 1 are shown the molar extinction coefficient ε (l·mol⁻¹·cm⁻¹) and the ultraviolet-ray radiating period (seconds) of the combination of the ultraviolet lamp species with the photopolymerization initiator of each of the above-mentioned examples and comparative examples. The radiating period was calculated out in accordance with an expression of the radiation dose (mJ/cm²) of the ultraviolet rays/the irradiance (mW/cm²) of the ultraviolet rays.

**[Table 1]**

| | Photopolymerization initiator | Ultraviolet lamp type | Irradiance (mW/cm²) | Ultraviolet lamp peak wavelength (nm) | Molar extinction coefficient ε (l·mol⁻¹·cm⁻¹) of photopolymerization initiator at peak wavelength | Up to a radiation dose of 600 mJ/cm² | | Up to a radiation dose of 2400 mJ/cm² | | Heat-resistant holding power: shift distance (mm) | Rough surface adhesive strength (N/20-mm) |
|---|---|---|---|---|---|---|---|---|---|---|---|
| | | | | | | Polymerization rate (%) | Ultraviolet-r ay-radiating period (seconds) | Polymerization rate (%) | Ultraviolet-ray-radiating period (seconds) | | |
| Example 1 | IRGACURE 184/651 | V VALVE | 75 | 400-430 | 0 < ε < 1 | 29 | 8 | 94 | 32 | 0.2 (○) | 3.4 (○) |
| Example 2 | IRGACURE 184/651 | UV-LED | 75 | 365 | ε = '60 | 13 | 8 | 82 | 32 | 0.5 (○) | 3.4 (○) |
| Example 3 | IRGACURE 184 | Metal halide | 75 | 360-380 | 0 < ε < 40 | 10 | 8 | 80 | 32 | 0.2 (○) | 3.1 (○) |
| Example 4 | IRGACURE 184 | D VALVE | 75 | 360-380 | 0 < ε < 40 | 9 | 8 | 83 | 32 | 0.2 (○) | 4.5 (○) |
| Example 5 | IRGACURE 184 | M VALVE | 75 | 360, 400 | ε = 40,1 | 9 | 8 | 85 | 32 | 0.3 (○) | 3.8 (○) |
| Example 6 | IRGACURE 184 | V VALVE | 75 | 400-430 | 0 < ε < 1 | 10 | 8 | 95 | 32 | 0.2 (○) | 3.8 (○) |
| Comparative Example 1 | IRGACURE 184/651 | Metal halide | 75 | 360-380 | 20 < ε < 100 | 31 | 8 | 93 | 32 | Sample dropped after 101 minutes (×) | 3.7 (○) |
| Comparative Example 2 | IRGACURE 184/651 | Black light | 8 | 330-360 | 90 < ε < 150 | 60 | 75 | 98 | 300 | 0.2 (○) | 1.8 (x) |
| Comparative Example 3 | IRGACURE 651 | D VALVE | 75 | 360-380 | 40 < ε < 170 | 41 | 8 | 97 | 32 | Sample dropped after 32 minutes (×) | 7.6 (○) |
| Comparative Example 4 | IRGACURE 651 | M VALVE | 75 | 360, 400 | ε = 170, 1 | 47 | 8 | 94 | 32 | Sample dropped after 38 minutes (×) | 5.8 (○) |
| Comparative Example 5 | IRGACURE 819 | Metal halide | 75 | 360-380 | 660 < ε < 900 | 72 | 8 | 84 | 32 | Sample dropped after 3 minutes (×) | 12.8 (○) |
| Comparative Example 6 | IRGACURE 819 | V VALVE | 75 | 400-430 | 100 < ε < 660 | 85 | 8 | 88 | 32 | Sample dropped after 5 minutes (×) | 9.0 (○) |

Each of the pressure-sensitive adhesive sheets was evaluated according to methods described below.

### Polymerization Rate:

The weight X1 (unit: g) of the pressure-sensitive adhesive sheet, the polymerization rate of which was to be measured, as a sample was measured. After the sample was dried at 130°C for 2 hours, the weight X2 (unit: g) was again measured. From these weights X1 g and X2g, the polymerization rate was calculated in accordance with an expression of "the polymerization rate (unit: %)" = (X2/X1) x 100.

### Heat-Resistant Holding Strength:

From one of the two adhesive surfaces of the pressure-sensitive adhesive sheet, the release liner (polyester film) was peeled, and the pressure-sensitive adhesive sheet was bonded onto a polyethylene terephthalate film having a thickness of 50 µm. The resultant was cut into a width of 10 mm to produce a sample tape. The release liner was peeled from the other adhesive surface of the sample tape. The sample tape was put onto a bakelite plate as an adherend, and then a roller having a weight of 2 kg was reciprocated one time onto this unit to bond the sample tape onto the plate with a bonded surface area of 10 mm width and 29 mm length. The resultant was allowed to stand still in an environment of 80°C temperature for 30 minutes. Thereafter, the bakelite plate was vertically hung, and a load of 500 g was given to a free end of the sample piece. The sample piece, to which the load was given, was allowed to stand still in an environment of 80°C temperature for two hours. If the sample piece dropped down in a period less than the two hours, the period up to the drop was measured. When the sample tape adhered onto the adherend without dropping down even after the two hours, a measurement was made about the distance (mm) of the shift of the sample tape from the position where the tape was initially bonded. When the shift distance of the sample tape was less than 10 mm in this case, the pressure-sensitive adhesive sheet was judged to be good (○). When the shift distance of the sample tape was 10 mm or more, or the sample tape dropped down, the pressure-sensitive adhesive sheet was judged to be bad (×).

### Rough Surface Adhesive Strength (Adhesive Strength onto Urethane Foam):

From one of the two adhesive surfaces of the pressure-sensitive adhesive sheet, the release liner (polyester film) was peeled, and the pressure-sensitive adhesive sheet was bonded onto a polyethylene terephthalate film having a thickness of 50 µm. The resultant was cut into a width of 20 mm to produce a sample tape. The sample tape was put onto a soft polyurethane foam ("CALM FLEX F2", manufactured by Inoac Corp.) fixed onto an aluminum plate of 5 mm thickness with a double sided pressure-sensitive adhesive tape. A roller having a weight of 2 kg was reciprocated one time onto this unit to bond the sample tape onto the aluminum plate. The bonding was attained at a 90% load (permitting the foam to be compressed into 90%) by use of a tool. After 30 minutes, a tensile tester (SHIMADZU AUTOGRAPH AG-IS (MS model), manufactured by Shimadzu Corp.) was used to measure the load required when the sample tape (adhesive tape) was peeled from the unit. The measurement was made in an atmosphere of 230°C and a relative humidity of 50% under conditions that the peeling angle was 180°, the tensile speed was 300 mm/min, and the peeling length was 60 mm. When the adhesive strength onto the urethane foam was 3 N/20 mm or more in this case, the pressure-sensitive adhesive sheet was judged to be good (○). When the pressure-sensitive adhesive strength was less than 3 N/20 mm, the pressure-sensitive adhesive sheet was judged to be bad (×).

Results of the evaluations are shown in Table 1. In Comparative Examples 5 and 6, the polymerization rate did not reach to 97% even when the ultraviolet rays were radiated for 180 seconds.

## Claims

1. A method for producing a pressure-sensitive adhesive sheet, comprising the step of applying, onto a substrate, an ultraviolet-ray curing-type acrylic pressure-sensitive adhesive composition comprising a photopolymerization initiator, as well as a monomer-component set that is/comprises an alkyl (meth)acrylate, and/or a partial polymer made from the monomer-component set, and
the step of radiating ultraviolet rays to the ultraviolet-ray curing-type acrylic pressure-sensitive adhesive composition, thereby curing the composition to form a pressure-sensitive adhesive layer,
wherein the irradiance of the ultraviolet rays radiated in the pressure-sensitive adhesive layer forming step is 25 mW/cm² or more; and
when the radiation dose of the radiated ultraviolet rays is 600 mJ/cm², the polymerization rate of the monomer-component set is 30% or less, and when the radiation dose of the radiated ultraviolet rays is 2400 mJ/cm², the polymerization rate of the monomer-component set is 70% or more.

2. The pressure-sensitive adhesive sheet producing method according to claim 1, wherein the ultraviolet rays have a peak wavelength in a wavelength range in which the molar extinction coefficient ε (l·mol⁻¹·cm⁻¹) of the polymerization initiator satisfies an expression of 0 < ε < 70.

3. The pressure-sensitive adhesive sheet producing method according to claim 2, wherein the peak wavelength of the ultraviolet rays is present in the range of 200 to 500 nm.

4. The pressure-sensitive adhesive sheet producing method according to any one of claims 1 to 3, wherein the monomer-component set comprises a polyfunctional monomer.

5. The pressure-sensitive adhesive sheet producing method according to any one of claims 1 to 4, wherein about the ultraviolet rays radiated in the pressure-sensitive adhesive layer forming step, conditions for the radiation are constant from the start of the radiation to the end of the radiation.

6. The pressure-sensitive adhesive sheet producing method according to any one of claims 1 to 5, wherein in the pressure-sensitive adhesive layer forming step, one or more ultraviolet lamps are of a single type.
